# EUROPEAN PATENT SPECIFICATION

(11) **EP 1 700 250 B1**
(45) Date of publication and mention of the grant of the patent: **18.02.2015**
(21) Application number: 03819295.1
(22) Date of filing: 30.12.2003
(51) Int. Cl.: G06F 17/27

(54) **Method and system for text segmentation**
Verfahren und System zur Textsegmentierung
Procédé et système de segmentation de texte

(43) Date of publication of application: 13.09.2006
(60) Divisional application: 11163970.4
(73) Proprietor: Google Inc., Mountain View, CA 94043 (US)
(72) Inventor: WEISSMAN, Adam J., Santa Monica, CA 90405 (US)
(74) Representative: Schley, Jan Malte
(86) International application number: PCT/US2003/041609
(87) International publication number: WO 2005/069199

(56) References cited:
- US-B1- 6 269 189
- THANARUK THEERAMUNKONG & SASIPORN USANAVASIN: "Non-dictionary-based Thai word segmentation using decision trees" HUMAN LANGUAGE TECHNOLOGY CONFERENCE. PROCEEDINGS OF THE FIRST INTERNATIONAL CONFERENCE ON HUMAN LANGUAGE TECHNOLOGY RESEARCH, [Online] 18 March 2001 (2001-03-18), - 21 March 2001 (2001-03-21) XP002508135 San Diego, CA, USA Retrieved from the Internet: URL:http://citeseer.ist.psu.edu/theeramunk ong01nondictionarybased.html> [retrieved on 2008-12-15]
- ANONYMOUS: "CIRCA Technology: Applying meaning to information management" AN APPLIED SEMANTICS WHITEPAPER, [Online] 28 December 2003 (2003-12-28), XP002508136 Retrieved from the Internet: URL:http://web.archive.org/web/20031228154 829/lsdis.cs.uga.edu/SemWebCourse_files/WP /Applied-Semantics-CIRCA_wp.pdf> [retrieved on 2008-12-15]

## Description

The present invention relates generally to text segmentation and, more particularly, to segmenting strings of characters.

BACKGROUND OF THE INVENTION Text processing methods and systems exist that attempt to interpret data representing text. Text processing is made more difficult when a string of characters is received that has no breaks indicating words or other tokens. One of the first steps in processing such strings of characters is to segment the string into tokens in order to interpret the string. Such tokens can be words, acronyms, abbreviations, proper names, geographical names, stock market ticker symbols or other tokens.

Depending on the length of the string of characters, the number of possible combinations of tokens can be high. However, it is generally necessary to perform the segmentation process at a fast rate.

An example of a short string of text is a domain name. A domain name can locate an organization or other entity on the Internet. For example, the domain name <www. google. com> locates the company Google Inc. at a specific IP address on the World Wide Web. It is desirable to be able to process a domain name into tokens, so that the tokens can be interpreted.

The reference Theeramunkong (XP002508135 Thanaruk Theeramunkong & Sasiporn Usanavasin, "Non dictionary based Thai word segmentation using decision trees" Human Language Technology Conference, Proceedings of the First International Conference on Human Language Technology Research, 18th March 2001 - 21st March 2001) is directed to a non-dictionary based Thai word segmentation using decision trees. A word segmentation method that uses a set of rules to combine contiguous characters to an inseparable unit (a Thai character cluster) and then applies a learned decision tree to combine these contiguous units to words.

US6269189 (Chanod) relates to a method of finding selected character strings by performing an automatic search of a text to find character strings that match any of a list of selected strings. The automatic search includes a series of iterations, each with a starting point in the text. Each iteration determines whether its starting point is followed by a character string that matches any of the list of selected strings and that ends at a probable string ending. Each iteration also finds a starting point for the next iteration that is a probable string beginning.

### SUMMARY OF THE INVENTION

The present invention comprise systems and methods for text segmentation as defined in the appending claims 1 and 13. Preferred embodiments are described in the dependent claims. The present invention may identify tokens in strings of text. The present invention comprises accessing a string of characters, determining any long tokens, pinning down the second character through the second-to-last character in the long token, and determining tokens from the string of characters by keeping the pinned down contiguous characters together, and determining a plurality of combinations of tokens for the string of characters, wherein the number of combinations of tokens is reduced by the pinned down contiguous characters. Multiple long tokens can be determined and contiguous characters are pinned down in each long token. Additional aspects of the present invention are directed to computer systems and to computer-readable media having features relating to the foregoing aspects.

### BRIEF DESCRIPTION OF THE DRAWINGS

These and other features, aspects, and advantages of the present invention are better understood when the following Detailed Description is read with reference to the accompanying drawings, wherein:
FIG. 1 illustrates a block diagram of a system in accordance with one embodiment of the present invention;
FIG. 2 illustrates a flow diagram of a method in accordance with one embodiment of the present invention;
FIG. 3 illustrates a subroutine of the method shown in FIG. 2.

### DETAILED DESCRIPTION

The present invention comprises methods and systems for text segmentation, including methods and systems for identifying tokens in a string of characters. Reference will now be made in detail to exemplary examples of the invention as illustrated in the text and accompanying drawings. Those skilled in the art will recognize that many other implementations are possible, consistent with the present invention. The same reference numbers are used throughout the drawings and the following description to refer to the same or like parts.

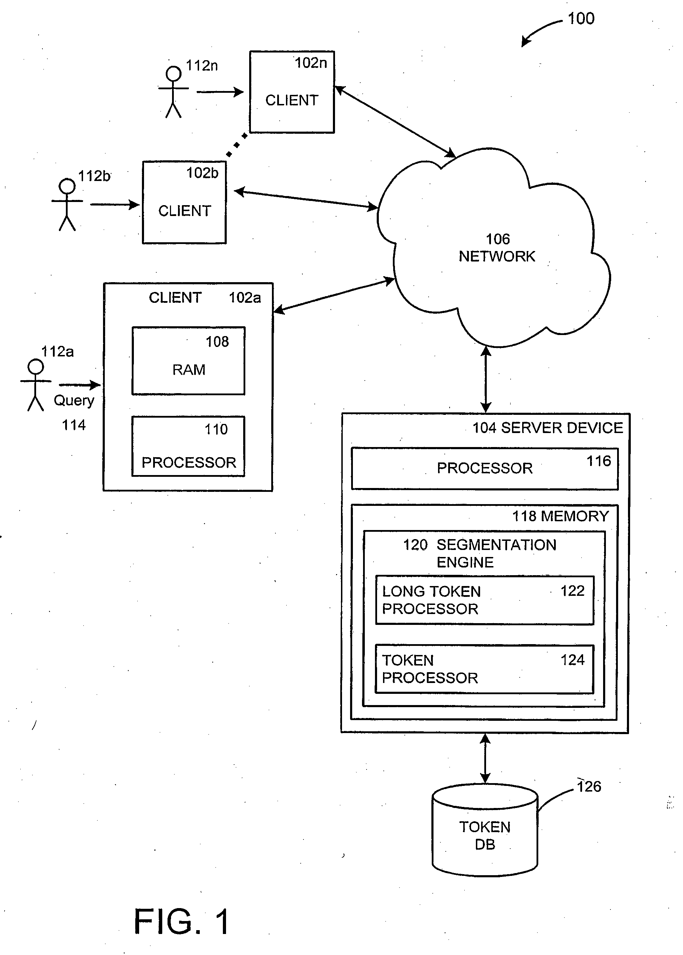

Various systems in accordance with the present invention may be constructed. FIG. 1 is a diagram illustrating an exemplary system in which exemplary examples of the present invention may operate. The present invention may operate, and be embodied in, other systems as well.

The system 100 shown in FIG. 1 includes multiple client devices 102a-n, a server device 104, and a network 106. The network 106 shown includes the Internet.

For example, other networks, such as an intranet may be used. Moreover, methods according to the present invention may operate in a single computer. The client devices 102a-n shown each include a computer-readable medium, such as a random access memory (RAM) 108 in the example shown, coupled to a processor 110.

The processor 110 executes a set of computer-executable program instructions stored in memory 108. Such processors may include a microprocessor, an ASIC, and state machines. Such processors include, or may be in communication with, media, for example computer-readable media, which stores instructions that, when executed by the processor, cause the processor to perform the steps described herein.

Examples of computer-readable media include, but are not limited to, an electronic, optical, magnetic, or other storage or transmission device capable of providing a processor, such as the processor in communication with a touch-sensitive input device, with computer-readable instructions. Other examples of suitable media include, but are not limited to, a floppy disk, CD-ROM, magnetic disk, memory chip, ROM, RAM, an ASIC, a configured processor, all optical media, all magnetic tape or other magnetic media, or any other medium from which a computer processor can read instructions. Also, various other forms of computer-readable media may transmit or carry instructions to a computer, including a router, private or public network, or other transmission device or channel, both wired and wireless. The instructions may comprise code from any computer-programming language, including, for example, C, C++, C#, Visual Basic, Java, and JavaScript.

Client devices 102a-n may also include a number of external or internal devices such as a mouse, a CD-ROM, a keyboard, a display, or other input or output devices. Examples of client devices 102a-n are personal computers, digital assistants, personal digital assistants, mobile phones, smart phones, pagers, digital tablets, laptop computers, a processor-based device and similar types of systems and devices. In general, a client device 102a-n may be any type of processor-based platform connected to a network 106 and that interacts with one or more application programs. The client devices 102a-n shown include personal computers executing a browser application program such as Internet Explorer TM, version 6.0 from Microsoft Corporation, Netscape Navigator, version 7.1 from Netscape Communications Corporation, and Safari, version 1.0 from Apple Computer.

Through the client devices 102a-n, users 112a-n can communicate over the network 106 with each other and with other systems and devices coupled to the network 106. As shown in FIG. 1, a server device 104 is also coupled to the network 106.

The server device 104 shown includes a server executing a segmentation engine application program located in memory 118. Similar to the client devices 102a- n, the server device 104 shown includes a processor 116 coupled to a computer readable memory 118. Server device 104, depicted as a single computer system, may be implemented as a network of computer processors. Examples of a server device 104 are servers, mainframe computers, networked computers, a processor-based device and similar types of systems and devices. Client processors 110 and the server processor 116 can be any of a number of well known computer processors, such as processors from Intel Corporation of Santa Clara, California and Motorola Corporation of Schaumburg, Illinois. The server device 104 may also be connected to a database 126.

The server device 104, or related device, can access the network 106 to receive strings of characters from other devices or systems connected to the network 106. Characters can include, for example, marks or symbols used in a writing system, including data representing a character, such as ASCII, ANSI, and EBCDIC or any other suitable character set.

In one example, the segmentation engine 120 segments a string of characters into potential combinations of tokens. A token can comprise a word, a proper name, a geographic name, an abbreviation, an acronym, a stock market ticker symbol, or other tokens. The segmentation engine 120 includes a long token processor 122 and a token processor 124. In the example shown, each comprises computer code residing in the memory 118. The long token processor 122 matches known long tokens in a string of characters and pins down contiguous characters contained in the long token. The token processor 124 utilizes the pinned down characters to determine a list of possible combinations of tokens from the string of characters. In one example, the token processor 124 determines a probability for each combination in the list. Other functions and characteristics of the long token processor 122 and the token processor 124 are further described below.

Server device 104 also provides access to other storage elements, such as a token storage element, in the example shown a token database 120. The token database can be used to store tokens. Data storage elements may include any one or combination of methods for storing data, including without limitation, arrays, hashtables, lists, and pairs. Other similar types of data storage devices can be accessed by the server device 104.

It should be noted that the present invention may comprise systems having different architecture than that which is shown in FIG. 1. For example, in some systems according to the present invention, the long token processor 122 may not be part of the segmentation engine 120 or may not be located on the same server device.

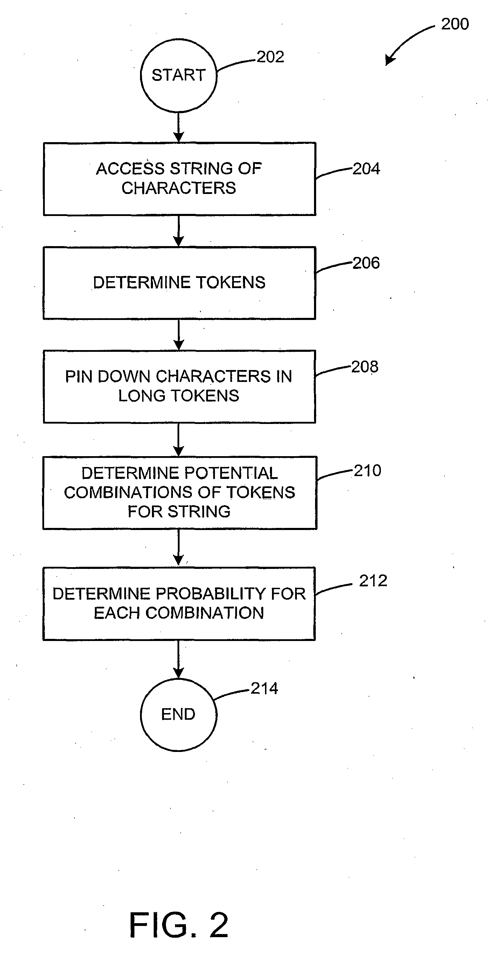

The system 100 shown in FIG. 1 is merely exemplary, and is used to explain the exemplary method shown in FIGS. 2-3.

Various methods in accordance with the present invention may be carried out. One exemplary method according to the present invention comprises accessing a string of characters, determining at least one long token, pinning down contiguous characters in the long token, determining tokens from the string of characters by keeping the pinned down contiguous characters together, and determining a plurality of combinations of tokens for the string of characters, wherein the number of combinations of tokens is reduced by the pinned down contiguous characters. Multiple long tokens can be determined and contiguous characters are pinned down in each long token. The exemplary method can also further comprise determining a likelihood or a probability for each combination and providing the combination with the highest likelihood. Combinations with the highest likelihoods can also be provided to other applications or alternatively a user can be provided with combinations having relative high likelihoods and be allowed to choose the desired combination.

In one example, the long token is greater than seven characters. The pinned down contiguous characters can be a set of characters from a second character of the long token to the next to the last character of the long token.

In one example, determining token comprises accessing adjacent characters until a match between a first group of adjacent characters and a first token is found, and storing the first token if it is determined that the first token contains none of the pinned down characters or if it is determined that the first token contains all of the pinned down contiguous characters for a long token. Determining tokens can also further comprise receiving a next adjacent character to provide a revised first group of adjacent characters, determining if the revised first group matches with a token, if the revised group matches with a second token then storing the second token if it is determined that the second token contains none of the pinned down characters or if it is determined that the second token contains all of the pinned down contiguous characters for a long token, and if the revised group does not match with a token then receiving a second group of adjacent characters. The second group of adjacent characters can begin with a character after a last character of the first stored token or it can begin after a previously determined token break. In one example, these steps in determining tokens are repeated until a plurality of combinations of tokens have been determined.

FIG. 2 illustrates an exemplary method according to an embodiment of the present invention. This exemplary method is provided by way of example, as there are a variety of ways to carry out methods according to the present invention. The method 200 shown in FIG. 2 can be executed or otherwise performed by any of various systems. The method 200 is described below as carried out by the system 100 shown in FIG. 1 by way of example, and various elements of the system 100 are referenced in explaining the example method of FIG. 2.

The method 200 shown provides a method for identifying tokens from a string of characters. Each block shown in FIG. 2 represents one or more steps carried out in the exemplary method 200. Referring to FIG. 2, in block 202, the example method 200 begins. Block 202 is followed by block 204, in which a string of characters is obtained by the segmentation engine 120. The string of characters can be obtained from a device connected to network 106, for example, or from another device.

Block 204 is followed by block 206, in which the long token processor 122 determines any long tokens. A long token can be, for example, any token equal to or greater than eight characters. Any number of characters can be chosen as a long token. The long tokens can be received from token database 126, from a device connected to network 106, or from another device. The long token processor 122 attempts to match long tokens with adjacent characters in the string of characters. In one example, the long token processor 122 may start with the first character of the string and attempt to match the next adjacent seven adjacent characters with a known long token. If no token is found with the first eight characters, the long token processor 122 can move down the string starting with the second character and the next adjacent seven characters and so on until the end of the string is reached. Multiple long tokens can be found for each string of characters.

For example, for the string of characters "transformationofprobability", the long token processor 122 can start with the character "t" and the adjacent seven characters "ransfor". The long token processor 122 can determine that the characters "transfer" can potentially be matched to some long tokens, such as "transform" and "transformation". The long token processor 122 continues reading characters and attempting to match the characters. When, for example, the long token processor 122 receives the character "m", the processor would match the characters with the long token "transform". However, when the next character is received, "a", the long token processor 122 continues receiving characters attempting to determine if the characters can be matched to a larger token, such as "transformation". In the example given, the characters could be matched to the token "transformation". When the next character "o" is received, the long token processor 122 would be unable to match the characters "transformationo" with a long token, so it can determine that the first fourteen characters should be matched with the token "transformation" and proceed processing.

The long token processor 122 would be unable to match the next two sets of eight characters beginning with "o" and "f' to any long tokens. The long token processor 122 can then determine that the next group of characters "probabil" can be matched with a long token and would continue receiving characters. The long token processor 122 can then match the long token "probability" with the remaining characters in the string.

Block 206 is followed by block 208, in which the long token processor pins down characters in the determined long tokens. By pinning the characters down, the long token processor 122 signifies that the characters should be used together in a single token. By pinning down characters of the long tokens of a text string the number of possible combinations of tokens in the text string is reduced, thereby, increasing the speed of the process. The long token processor 122 pins down contiguous characters in the center of a determined long token. In one example, the long token processor 122 pins down all the characters in a determined long token except a character at each end of the token. In the example above, for example, the long token processor can pin down the characters "ransformatio" of the determined long token "transformation" and can pin down the characters "robabilit" of the determined long token "probability".

Alternatively, the long token processor 122 can leave two or three characters unpinned at the each end of a determined long token. In the described example, characters are left unpinned at the ends of a token to avoid pinning down characters that appear to be a prefix or suffix of the long token, but are actually part of another token.

Block 208 is followed by block 210, in which the potential combinations of tokens are determined by the token processor 124. The long token processor 122 transfers to the token processor 124 any pinned down characters determined in block 208. The token processor 124 matches the string of characters to multiple tokens while considering any pinned down characters. The subroutine 210 continues until all potential token combinations have been identified and a list of all potential combinations of tokens is created. In one example, the token processor 124 can "cut" one or more adjacent characters that it cannot match to a token in a particular combination. By cutting one or more adjacent characters, the cut characters are removed from consideration for matching with a token for a particular combination of tokens. For example, for the string of characters "fortheheart" where the cutting of characters (represented with an "x") is permitted, the list of potential combinations of tokens may comprise:"for the heart", "fort heart" ,"fort he art", and "for x heart".

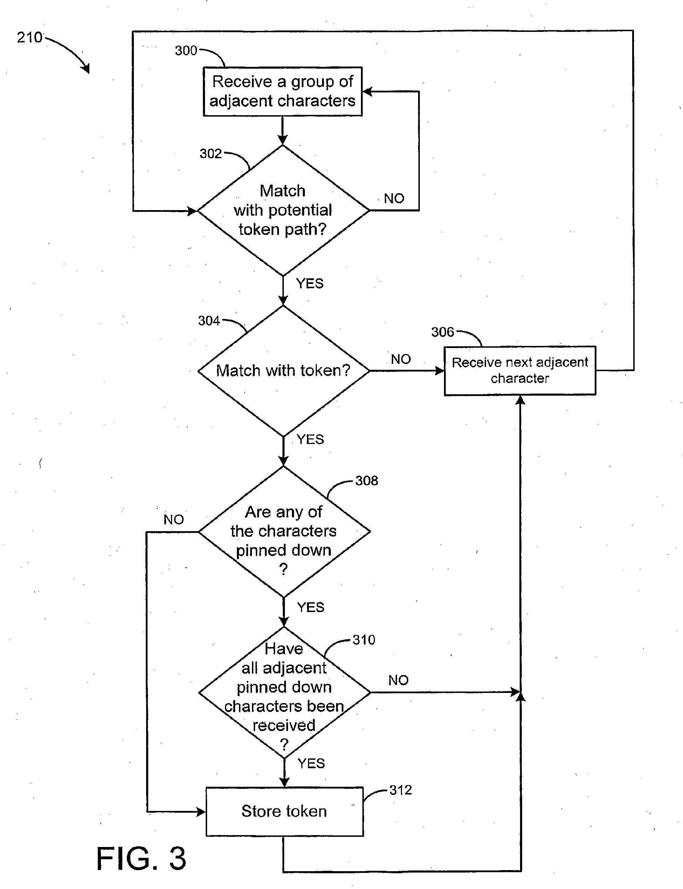

FIG. 3 illustrates a subroutine 210 for carrying out the method 200 shown in FIG. 2. The subroutine 210 determines potential combinations of tokens for the string of characters. An example of the subroutine is as follows.

The subroutine begins at block 300. In block 300 a group of adjacent characters is received or accessed by the token processor 124. In one example, at least two characters are received. Alternatively, one character can be received. In one example, the token processor 124 begins at one end of the string of characters and works its way through the multiple potential paths of tokens for the string until all of the multiple possibilities of combinations of tokens for the string have been determined.

Block 300 is followed by block 303, in which the token processor 122 determines if the received characters match to any token paths. In one example, the tokens are stored in a tree-like structure where, for example, each character is at the top of the tree and each step down the tree adds a character of a token. For the token "apple", for example, "a" is at the top of the tree, followed by "p" he next step down, followed by "p" the next step down, followed by"1"the next step down, and followed by "e" the next step down. At each step down, the tree can branch off to other paths that form various other tokens. For example, for the token "applied", the token path is the same as "apple" for the characters "appl" and then branches to "i", then "e", and then "d" for "applied" instead of "e" for apple. One example of such a tree-like structure is a Ternary Tree. If in block 300, for example, the characters "tra" are received, at block 302 the token processor 122 can determine that at least one token path exists that begins with the characters "tra". In one example, if only two characters are received, the token processor 124 attempts to match these two characters with a limited number of two letter tokens and does not attempt to match two characters with a token path.

If the characters processed in block 302 do not match to any token paths, then the token processor returns to block 300 and receives a new set of adjacent characters. For example, if the characters"12d"are received and these characters do not match to any token path, meaning that no tokens begin with the characters" 12d," the token processor returns to block 300 and receives a new group of adjacent characters. This can be, for example, the group starting with"2d". Subroutine 210 can be a recursive loop, such that the next set of adjacent characters can begin from any number of places in the string, such as the next character after the end of a found token.

All potential token paths can be followed to determine all combinations of tokens that can be formed from the characters in the string. The number of combinations of tokens is reduced by pinning down the characters in long tokens.

If a token path is determined to exist in block 302, then in block 304 the token processor 124 determines if the group of characters match to a token. For example, if the characters "tra" have been received, the token processor determines whether a token exists for "tra".

If a token is not determined to exist in block 304, then in block 306 the next adjacent character is received by the token processor 124 to form a revised group of adjacent characters. The token processor 124, then can determine if the revised group matches any token paths in block 302. For the example, "transformation of probability" after the characters "tra" are received the next adjacent character is "n" and the token processor 124 determines if "tran" matches a token path or paths. In this example, it does match several paths and the loop continues until a token is determined. For example, the loop continues until all of the characters "transform" are received, because, for example, "transform" is a token.

After a token is determined in block 304, the token processor 124 next determines whether any of the characters are pinned down. If none of the received characters are pinned down, then the token processor 124 notes the potential token break, receives the next adjacent character, and continues at block 302.

If the token processor 124 determines that some of the characters have been pinned down in block 308, the token processor 124 then determines in block 310 whether all pinned down contiguous characters have been received. In the example above for "transformation of probability" where the characters "transformation" are received, the token processor 124 determines that all of the adjacent pinned down characters have been received. If only the characters "trans" are received, for example, the token processor 124 determines that not all of the adjacent pinned down characters have been received. By not allowing tokens to be formed (or token breaks to occur) within the adjacent pinned down characters, the number of combinations of tokens for the character string can be greatly reduced.

If all adjacent pinned down characters have been received, the token processor 124 stores the token in block 312. The token processor then receives the next adjacent character in block 306 and continues the recursive loop at block 302.

If all adjacent pinned down characters have not been received, the token processor 124 receives the next adjacent character in block 306 and continues the recursive loop at block 302. In one example, the determination of whether all adjacent pinned down characters have been received is not determined until after the next adjacent character is received. For example, if the characters "transform" are received, the token processor can note the potential token break. However, when the next adjacent character "a" is received and it is determined that this character has been pinned down, the potential token break after "transform" can be disregarded. When the remaining characters of "transformation" are received "transformation" stored as a token. Alternatively, a potential token break after "transformation" can be stored instead of storing the token.

After a known complete token is stored, the next adjacent character is received in block 306 and the token processor 124 continues with subroutine 210 at block 302. When a match with tokens is not found, the token processor 124 receives a new group of adjacent characters. In one example, for example, the new group of adjacent characters can begin with the character after the last character of the smallest previously identified token. So that all potential token paths are explored and all potential combinations of tokens for the string are identified and a list of all potential token combinations is compiled.

Referring again to FIG. 2, block 210 is followed by block 212, in which the likelihood or probability for each combination in the list is determined by the token processor 124. In one example, the likelihood of each combination is based on the frequency of the tokens in the combination. The frequency of tokens can be predetermined from an analysis of the World Wide Web. The frequency of each token in a combination can be multiplied together and then biased based on the number of words in the combination. Cut characters can be given a low likelihood.

The combination or combinations with the highest likelihood can then be used in further processing or passed on to a user, for example, depending on the application. Alternatively, a plurality of the top combinations based on likelihood can be presented to a user and the user can select the desired combination.

The present invention can be used in a variety of applications where the segmentation of text, such as a domain name, is needed. For example, the present invention can be used with a domain name advertising product on the Internet. If a user enters a domain name for a non-existing website, the segmentation engine can be used to segment the domain name entered, so that a website or advertisement relevant to the entered text can be presented to the user. Similarly, the present invention can be used to segment an entered domain name so that advertising relevant to the domain name can be displayed to the user. The present invention can also be used when a user desires to purchase a domain name, but the domain name is unavailable. The segmentation engine can segment the entered domain name and this information can be used to suggest other similar domain names that are available.

While the above description contains many specifics, these specifics should not be construed as limitations on the scope of the invention, but merely as exemplifications of the disclosed embodiments.

## Claims

1. A computer-implemented method for text segmentation, comprising the steps in the order of:
(i) accessing (204) a string of characters;
(ii) determining (206) at least one long token (210) from the string of characters, each long token having a length greater than or equal to a predetermined number of characters;
(iii) determining (212) a plurality of combinations of tokens for the string of characters;
**characterized by the steps of:**
(iv) pinning down (208) the second character through the second-to-last character of each of the at least one long token;
(v) keeping adjacent pinned down contiguous characters together to determine a plurality of potential combinations of tokens (210) from the string of characters;
(vi) determining the plurality of potential combinations of tokens (210) from the string of characters without allowing token breaks to occur within adjacent pinned down characters;
(vii) determining a likelihood for each of the plurality of potential combinations of tokens based on frequencies with which tokens in the combinations of tokens occur; and
(viii) using one or more combinations of tokens with the highest likelihoods from the plurality of potential combination of tokens for further processing or for presentation to a user.

2. The method of claim 1, wherein the predetermined number of characters is eight.

3. The method of any of claims 1 to 2, wherein:
the at least one long token includes multiple long tokens.

4. The method of any of claims 1 to 3, wherein determining a plurality of combinations of tokens comprises:
(a) accessing adjacent characters until a match (302) between a first group of adjacent characters and a first token is found; and
(b) storing (312) the first token if it is determined that the first token contains none of the pinned down characters or if it is determined that the first token contains all of the pinned down contiguous characters.

5. The method of claim 4, wherein determining tokens further comprises:
(c) accessing (300) a next adjacent character to provide a revised first group of adjacent characters;
(d) determining (302) if the revised first group matches with a token;
(e) if the revised first group matches (304) with a second token, then storing (312) the second token if it is determined that the revised first group contains none of the pinned down characters or if it is determined that the revised first group contains all of the pinned down contiguous characters for the long token; and
(f) if the revised first group does not match with a token then receiving (306) a second group of adjacent characters.

6. The method of claim 5, wherein steps (a) through (f) are repeated until the plurality of combinations of tokens have been determined.

7. The method of claim 5 or claim 6, wherein the second group of adjacent characters begins with a character after a last character of the first stored token.

8. The method of any of the preceding claims, further comprising:-
(i) providing the user with the one or more combinations of tokens having the highest likelihoods; and
(ii) allowing the user to choose a desired combination of tokens from the one or more combinations of tokens presented to the user.

9. The method of any of claims 1 to 8, wherein frequencies with which tokens in the combinations of tokens occur is determined from an analysis of the World Wide Web.

10. The method of any of any of claims 1 to 9, wherein the plurality of potential combinations of tokens are determined using tokens that are stored in a tree-like structure where each character is at a top of a tree and each step down the tree adds a character of a token.

11. The method of claim 10, wherein the plurality of potential combinations of tokens are determined based on characters in the string of characters matching to token paths in the tree-like structure.

12. The method of claim 10 or 11, wherein the tree-like structure comprises a ternary tree.

13. A computer readable medium containing program code to execute, by one or more computers, the method for text segmentation as claimed in any of the preceding claims.

14. A system (100) for providing text segmentation, the system comprising:
one or more computers (104); and
a computer-readable medium (118) coupled to the one or more computers (104) having instructions stored thereon which, when executed by the one or more computers (104), cause the one or more computers (104) to perform operations, the operations comprising the steps in the order of:
(i) accessing (204) a string of characters;
(ii) determining (206) at least one long token (210) from the string of characters, each long token having a length greater than or equal to a predetermined number of characters;
(iii) determining (212) a plurality of combinations of tokens for the string of characters;
**characterized by the steps of:**
(iv) pinning down (208) the second character through the second-to-last character of each of the at least one long token;
(v) keeping adjacent pinned down contiguous characters together to determine a plurality of potential combinations of tokens (210) from the string of characters;
(vi) determining the plurality of potential combinations of tokens (210) from the string of characters without allowing token breaks to occur within adjacent pinned down characters;
(vii) determining a likelihood for each of the plurality of potential combinations of tokens based on frequencies with which tokens in the combinations of tokens occur; and
(viii) using one or more combinations of tokens with the highest likelihoods from the plurality of potential combination of tokens for further processing or for presentation to a user.

## Patentansprüche

1. Ein computer-implementiertes Verfahren zur Textsegmentierung, umfassend folgende Schritte in der Reihenfolge von:
(i) Zugreifen (204) auf eine Kette von Zeichen;
(ii) Bestimmen (206) von mindestens einem langen Token (210) aus der Kette von Zeichen, wobei jedes lange Token eine Länge hat, die größer oder gleich einer vorbestimmten Anzahl an Zeichen ist;
(iii) Bestimmen (212) einer Mehrzahl von Kombinationen von Tokens für die Kette von Zeichen;
**gekennzeichnet durch** die Schritte von:
(iv) Anheften (208) des zweiten Zeichens **durch** das vorletzte Zeichen von jedem von dem mindestens einen langen Token;
(v) Zusammenhalten benachbarter angehefteter angrenzender Zeichen, um eine Mehrzahl von möglichen Kombinationen von Tokens (210) aus der Kette von Zeichen zu bestimmen;
(vi) Bestimmen der Mehrzahl von möglichen Kombinationen von Tokens (210) aus der Kette von Zeichen ohne den Tokens zu erlauben, dass Brüche innerhalb benachbarter angehefteter Zeichen auftreten;
(vii) Bestimmen einer Wahrscheinlichkeit für jede der Mehrzahl von möglichen Kombinationen von Tokens basierend auf Frequenzen, mit welcher die Tokens in den Kombinationen von Tokens auftreten; und
(viii) Verwenden einer oder mehrerer Kombinationen von Tokens mit den höchsten Wahrscheinlichkeiten aus der Mehrzahl von möglichen Kombinationen von Tokens zum weiteren Verarbeiten oder zur Darstellung für einen Nutzer.

2. Das Verfahren nach Anspruch 1, wobei die vorbestimmte Anzahl von Zeichen acht beträgt.

3. Das Verfahren nach irgendeinem der Ansprüche 1 bis 2, wobei das mindestens eine lange Token mehrere lange Tokens umfasst.

4. Das Verfahren nach irgendeinem der Ansprüche 1 bis 3, wobei Bestimmen einer Mehrzahl von Kombinationen von Tokens umfasst:
(a) Zugreifen auf benachbarte Zeichen bis eine Übereinstimmung (302) zwischen einer ersten Gruppe von benachbarten Zeichen und einem ersten Token gefunden wird; und
(b) Speichern (312) des ersten Tokens, wenn es bestimmt wird, dass das erste Token keine von den angehefteten Zeichen enthält oder wenn es bestimmt wird, dass das erste Token alle von den angehefteten angrenzenden Zeichen enthält.

5. Das Verfahren nach Anspruch 4, wobei Bestimmen von Tokens weiter umfasst:
(c) Zugreifen (300) auf einen nächstes benachbartes Zeichen, um eine revidierte erste Gruppe von Zeichen bereit zu stellen;
(d) Bestimmen (302), wenn die revidierte erste Gruppe mit einem Token übereinstimmt;
(e) wenn die revidierte erste Gruppe mit einem zweiten Token übereinstimmt (304), dann Speichern (312) des zweiten Tokens, wenn es bestimmt wird, dass die revidierte erste Gruppe keine von den angehefteten Zeichen enthält, oder wenn es bestimmt wird, dass die revidierte erste Gruppe alle von den angehefteten angrenzenden Zeichen für das lange Token enthält; und
(f) wenn die revidierte erste Gruppe nicht mit einem Token übereinstimmt, dann Empfangen (306) einer zweiten Gruppe von benachbarten Zeichen.

6. Das Verfahren nach Anspruch 5, wobei die Schritte (a) bis (f) wiederholt werden bis eine Mehrzahl von Kombinationen von Tokens bestimmt worden ist.

7. Das Verfahren nach Anspruch 5 oder Anspruch 6, wobei die zweite Gruppe von benachbarten Zeichen mit einem Zeichen nach dem letzten Zeichen des ersten gespeicherten Tokens beginnt.

8. Das Verfahren nach irgendeinem der vorangehenden Ansprüche, weiter umfassend:
(i) Bereit stellen für den Nutzer eine oder mehrere Kombinationen von Tokens, die die höchsten Wahrscheinlichkeiten haben; und
(ii) Erlauben dem Nutzer eine gewünschte Kombination von Tokens aus der einen oder den mehreren Kombinationen von Tokens, die dem Nutzer präsentiert werden, auszuwählen.

9. Das Verfahren nach irgendeinem der Ansprüche 1 bis 8, wobei Frequenzen, mit welcher Tokens in den Kombinationen von Tokens auftreten, bestimmt werden von einer Analyse des World Wide Web.

10. Das Verfahren nach irgendeinem der Ansprüche 1 bis 9, wobei die Mehrzahl von möglichen Kombinationen von Tokens bestimmt wird unter Verwendung von Tokens, die in einer baumähnlichen Struktur gespeichert werden, wo jedes Zeichen an der Spitze eines Baums ist und jeder Schritt am Baum herunter ein Zeichen eines Tokens hinzufügt.

11. Das Verfahren nach Anspruch 10, wobei die Mehrzahl von möglichen Kombinationen von Tokens bestimmt wird basierend auf Zeichen in der Kette von Zeichen, die mit Token-Pfaden in der baumähnlichen Struktur übereinstimmen.

12. Das Verfahren nach Anspruch 10 oder Anspruch 11, wobei die baumähnliche Struktur einen ternären Baum umfasst.

13. Ein computer-lesbares Medium umfassend Programmcode, um das Verfahren zur Textsegmentierung, wie in irgendeinem der vorangehenden Ansprüche beansprucht, durch einen oder mehrere Computer auszuführen.

14. Ein System (100) zum Bereitstellen von Textsegmentierung, das System umfassend:
einen oder mehrere Computer (104); und
ein computer-lesbares Medium (118) gekoppelt an den einen oder die mehreren Computer (104), das darauf gespeicherte Instruktionen hat, die,
wenn sie durch den einen oder die mehreren Computer ausgeführt werden, bewirken, dass der eine oder die mehreren Computer (104) Operationen durchrühren, die Operationen umfassend die Schritte in der Reihenfolge von:
(i) Zugreifen (204) auf eine Kette von Zeichen;
(ii) Bestimmen (206) von mindestens einem langen Token (210) aus der Kette von Zeichen, wobei jedes lange Token eine Länge hat, die größer oder gleich einer vorbestimmten Anzahl an Zeichen ist;
(iii) Bestimmen (212) einer Mehrzahl von Kombinationen von Tokens für die Kette von Zeichen;
**gekennzeichnet durch** die Schritte von:
(iv) Anheften (208) des zweiten Zeichens **durch** das vorletzte Zeichen von jedem von dem mindestens einen langen Token;
(v) Zusammenhalten benachbarter angehefteter angrenzender Zeichen, um eine Mehrzahl von möglichen Kombinationen von Tokens (210) aus der Kette von Zeichen zu bestimmen;
(vi) Bestimmen der Mehrzahl von möglichen Kombinationen von Tokens (210) aus der Kette von Zeichen ohne den Tokens zu erlauben, dass Brüche innerhalb benachbarter angehefteter Zeichen auftreten;
(vii) Bestimmen einer Wahrscheinlichkeit für jede der Mehrzahl von möglichen Kombinationen von Tokens basierend auf Frequenzen, mit welcher die Tokens in den Kombinationen von Tokens auftreten; und
(viii) Verwenden einer oder mehrerer Kombinationen von Tokens mit den höchsten Wahrscheinlichkeiten aus der Mehrzahl von möglichen Kombinationen von Tokens zum weiteren Verarbeiten oder zur Darstellung für einen Nutzer.

## Revendications

1. Procédé mis en oeuvre par ordinateur de segmentation de texte comprenant les étapes suivantes :
(i) accéder (204) à une chaîne de caractères ;
(ii) déterminer (206) au moins une unité lexicale longue (210) à partir de la chaîne de caractères, chaque unité lexicale longue ayant une longueur supérieure ou égale à un nombre prédéterminé de caractères ;
(iii) déterminer (212) une pluralité de combinaisons d'unités lexicales pour la chaîne de caractères ;
**caractérisé par** les étapes suivantes :
(iv) isoler (208) les caractères allant du deuxième caractère à l'avant-dernier caractère de chacune de ladite unité lexicale longue ;
(v) assembler les caractères contigus isolés adjacents pour déterminer une pluralité de combinaisons potentielles d'unités lexicales (210) à partir de la chaîne de caractères ;
(vi) déterminer la pluralité de combinaisons potentielles d'unités lexicales (210) à partir de la chaîne de caractères sans que des coupures d'unités lexicales puissent se produire à l'intérieur des caractères isolés adjacents ;
(vii) déterminer une probabilité pour chacune de la pluralité de combinaisons potentielles d'unités lexicales en fonction des fréquences d'apparition des unités lexicales dans les combinaisons d'unités lexicales ; et
(viii) utiliser une ou plusieurs combinaisons d'unités lexicales ayant les probabilités les plus élevées à partir de la pluralité de combinaisons potentielles d'unités lexicales pour un autre traitement ou pour une présentation à un utilisateur.

2. Procédé selon la revendication 1, dans lequel le nombre prédéterminé de caractères est huit.

3. Procédé selon l'une quelconque des revendications 1 à 2, dans lequel :
ladite unité lexicale longue comprend plusieurs unités lexicales longues.

4. Procédé selon l'une quelconque des revendications 1 à 3, dans lequel l'étape consistant à déterminer une pluralité de combinaisons d'unités lexicales comprend :
(a) accéder à des caractères adjacents jusqu'à ce qu'une similitude (302) entre un premier groupe de caractères adjacents et une première unité lexicale soit trouvée ; et
(b) stocker (312) la première unité lexicale s'il est déterminé que la première unité lexicale ne contient aucun des caractères isolés ou s'il est déterminé que la première unité lexicale contient tous les caractères contigus isolés.

5. Procédé selon la revendication 4, dans lequel l'étape consistant à déterminer des unités lexicales comprend en outre :
(c) accéder (300) à un caractère adjacent suivant pour fournir un premier groupe révisé de caractères adjacents ;
(d) déterminer (302) si le premier groupe révisé correspond à une unité lexicale ;
(e) si le premier groupe révisé correspond (304) à une deuxième unité lexicale, alors stocker (312) la deuxième unité lexicale s'il est déterminé que le premier groupe révisé ne contient aucun des caractères isolés ou s'il est déterminé que le premier groupe révisé contient tous les caractères contigus isolés pour l'unité lexicale longue ; et
(f) si le premier groupe révisé ne correspond pas à une unité lexicale, alors recevoir (306) un deuxième groupe de caractères adjacents.

6. Procédé selon la revendication 5, dans lequel les étapes (a) à (f) sont répétées jusqu'à ce que la pluralité de combinaisons d'unités lexicales a été déterminée.

7. Procédé selon la revendication 5 ou la revendication 6, dans lequel le deuxième groupe de caractères adjacents commence par un caractère suivant un dernier caractère de la première unité lexicale stockée.

8. Procédé selon l'une quelconque des revendications précédentes, comprenant en outre les étapes suivantes :
(i) fournir à l'utilisateur une ou plusieurs combinaisons d'unités lexicales ayant les probabilités les plus élevées ; et
(ii) permettre à l'utilisateur de choisir une combinaison désirée d'unités lexicales à partir des une ou plusieurs combinaisons d'unités lexicales présentées à l'utilisateur.

9. Procédé selon l'une quelconque des revendications 1 à 8, dans lequel les fréquences d'apparition des unités lexicales dans les combinaisons d'unités lexicales sont déterminées à partir d'une analyse du Web.

10. Procédé selon l'une quelconque des revendications 1 à 9, dans lequel la pluralité de combinaisons potentielles d'unités lexicales est déterminée en utilisant des unités lexicales qui sont stockées dans une structure arborescente dans laquelle chaque caractère est situé au sommet d'un arbre et chaque étape descendant l'arbre ajoute un caractère d'une unité lexicale.

11. Procédé selon la revendication 10, dans lequel la pluralité de combinaisons potentielles d'unités lexicales est déterminée selon que des caractères dans la chaîne de caractères correspondent à des chemins d'unités lexicales dans la structure arborescente.

12. Procédé selon la revendication 10 ou 11, dans lequel la structure arborescente comprend un arbre ternaire.

13. Support lisible par ordinateur contenant un code de programme permettant d'exécuter, par un ou plusieurs ordinateurs, le procédé de segmentation de texte selon l'une quelconque des revendications précédentes.

14. Système (100) permettant de fournir une segmentation de texte, comprenant :
un ou plusieurs ordinateurs (104) ; et un support lisible par ordinateur (118) couplé aux un ou plusieurs ordinateurs (104) sur lequel sont stockées des instructions qui, lorsqu'elles sont exécutées par les un ou plusieurs ordinateurs (104), amènent les un ou plusieurs ordinateurs (104) à exécuter des opérations, les opérations comportant les étapes suivantes :
(i) accéder (204) à une chaîne de caractères ;
(ii) déterminer (206) au moins une unité lexicale longue (210) à partir de la chaîne de caractères, chaque unité lexicale longue ayant une longueur supérieure ou égale à un nombre prédéterminé de caractères ;
(iii) déterminer (212) une pluralité de combinaisons d'unités lexicales pour la chaîne de caractères ;
**caractérisé par** les étapes suivantes :
(iv) isoler (208) les caractères allant du deuxième caractère à l'avant-dernier caractère de chacune de ladite unité lexicale longue ;
(v) assembler les caractères contigus isolés adjacents pour déterminer une pluralité de combinaisons potentielles d'unités lexicales (210) à partir de la chaîne de caractères ;
(vi) déterminer la pluralité de combinaisons potentielles d'unités lexicales (210) à partir de la chaîne de caractères sans que des coupures d'unités lexicales puissent se produire à l'intérieur des caractères isolés adjacents ;
(vii) déterminer une probabilité pour chacune de la pluralité de combinaisons potentielles d'unités lexicales en fonction des fréquences d'apparition des unités lexicales dans les combinaisons d'unités lexicales ; et
(viii) utiliser une ou plusieurs combinaisons d'unités lexicales ayant les probabilités les plus élevées à partir de la pluralité de combinaisons potentielles d'unités lexicales pour un autre traitement ou pour une présentation à un utilisateur.
